# DEMANDE DE BREVET EUROPEEN

(11) **EP 0 987 845 A1**
(43) Date de publication de la demande: **22.03.2000**
(21) Numéro de dépôt: 99402281.2
(22) Date de dépôt: 17.09.1999
(51) Int. Cl.: H04H 1/00, H04N 7/24

(54) **Dispositif de recalage horaire dans les réseaux de transmission de signaux numériques**

(30) Priorité: 17.09.1998 FR 9811642
(71) Demandeur: Itis, 35769 Saint Grégoire Cedex (FR)
(72) Inventeur: Faria, Gérard, 75116 Paris (FR)
(74) Mandataire: Ballot, Paul Denis Jacques

(57) **Abrégé**

L'invention concerne un dispositif de recalage horaire dans un réseau de transmission numérique terrestre du type utilisé par la radio ou la télévision numérique.

L'invention réside dans le fait que l'information horaire du signal numérique est modifiée dans le site de transmission avant le modulateur (60) pour lui substituer une information horaire qui est calculée (64) à partir de l'heure UTC fournie par un récepteur GPS (56) et incluant le retard de transmission du site concerné.

L'invention est applicable aux réseaux de transmission numérique terrestre pour la radio numérique DAB ou la télévision numérique DVB-T.

## Description

L'invention concerne les réseaux de transmission de type numérique et, plus particulièrement dans de tels réseaux, un dispositif pour recaler l'heure à laquelle l'information est transmise aux récepteurs.

Dans les réseaux de transmission de type analogique, les délais de transmission des signaux analogiques sont de faible durée et ne sont pratiquement pas détectables par l'auditeur d'une station radio ou le téléspectateur d'une station de télévision.

Dans le cas de réseaux de transmission de type numérique, qu'il s'agisse d'un réseau radio ou télévision, les signaux analogiques sont codés en nombres binaires sur lesquels sont effectués un certain nombre de traitements numériques, ces traitements occasionnant des retards qui s'accumulent du début à la fin de la chaîne de transmission.

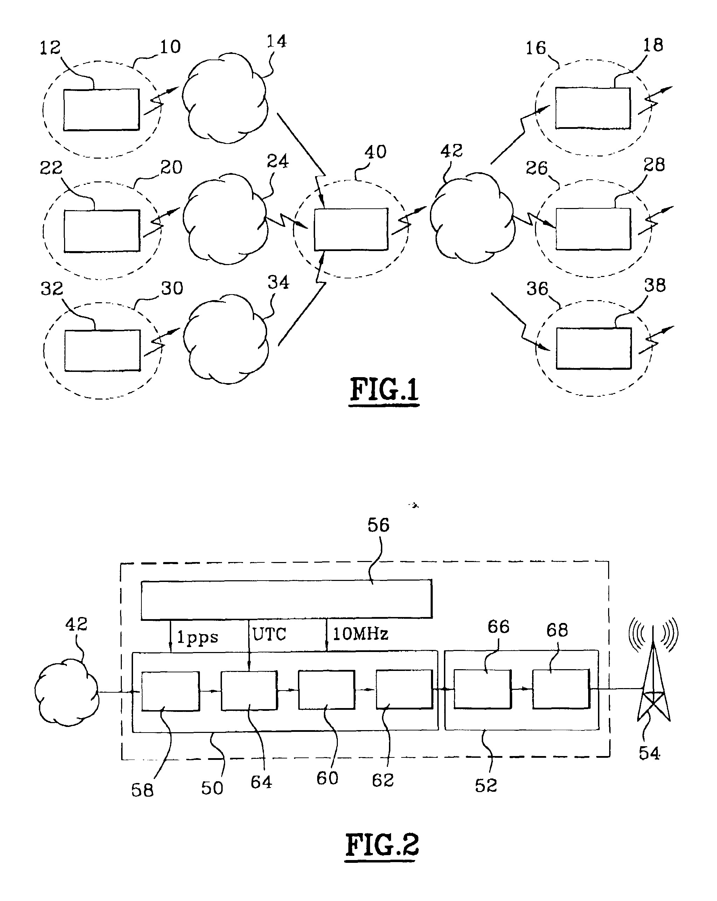

La figure 1 est un schéma d'une chaîne de transmission de type numérique qui commence par des studios 10, 20 et 30, de radio ou de télévision, dont les signaux analogiques audio et/ou vidéo sont codés en nombres binaires par des codeurs 12, 22 et 32 respectivement. Ces codes binaires provenant des studios 10, 20 et 30 sont transmis à un site de multiplexage 40 par l'intermédiaire de réseaux de collecte 14, 24 et 34.

Dans le site de multiplexage 40, les codes binaires provenant des différents studios sont "mélangés" pour constituer ce qu'on appelle un "bouquet" numérique. Ce bouquet est distribué à des sites de transmission 16, 26 et 36 par l'intermédiaire d'un réseau de distribution 42 dit "primaire". Dans ces sites de transmission 16, 26 et 36, qui comprennent chacun un ensemble modulateur/émetteur 18, 28 et 38, le bouquet est émis vers les récepteurs des usagers du réseau de radiodiffusion ou de télédiffusion par un réseau de distribution dit "secondaire".

Dans une structure selon le schéma de la figure 1, chaque site, codage, multiplexage et transmission, effectue un traitement numérique dont la durée n'est pas négligeable tandis que chaque réseau de collecte, de distribution primaire et de distribution secondaire, introduit un délai variable qui lui aussi n'est pas négligeable.

L'addition de ces durées de traitement numérique et de ces durées de transmission conduit à un décalage horaire entre le moment de la prise du son ou de l'image et le moment où ce son ou cette image est reçu par le récepteur de l'usager.

En outre, dans les nouvelles normes de diffusion numérique hertzienne de radio ou de télévision, il est prévu d'intégrer dans les "bouquets" des informations de services en plus des programmes audio et/ou vidéo. Or, parmi ces informations de services, appelés SI, il y a la date et l'heure qui sont habituellement introduites dans le studio 10, 20, 30 ou par l'opérateur du site de multiplexage 40 en utilisant des informations fournies par un récepteur dit GPS, GPS étant l'acronyme de l'expression anglo-saxonne "Global Positioning System".

Ces informations fournies par le récepteur GPS comprennent une référence de temps d'une impulsion par seconde, une référence de fréquence par un signal à la fréquence 10 MHz et l'information de date et heure dite "UTC", UTC étant l'acronyme de l'expression anglo-saxonne "Universal Time Coordinated" ou "heure du méridien de Greenwich" utilisant le calendrier Julien. En outre, pour tenir compte que l'information UTC correspond à l'heure du méridien de Greenwich, il est tenu compte du "décalage horaire" par rapport à ce méridien de la zone desservie par le bouquet en utilisant l'information de l'heure locale donnée par le signal "LTO", LTO étant l'acronyme de l'expression anglo-saxonne "Local Time Offset".

Lorsque cette information de date et heure arrive au récepteur de l'usager, elle est d'autant plus erronée qu'elle a été introduite plus tôt dans la chaîne de transmission.

Le but de la présente invention est donc de réaliser un dispositif qui permet de recaler l'information horaire qui est transmise au récepteur de l'usager pour qu'elle corresponde à l'heure réelle du lieu de réception.

Ce but est atteint en mettant en oeuvre un dispositif de recalage horaire disposé dans chaque site de transmission 16, 26 et 36 et plus particulièrement à l'entrée du modulateur de chaque site, ce dispositif de recalage horaire utilisant l'information UTC fournie par le récepteur GPS ainsi que l'information de la durée de traitement dans le site de transmission et de la durée de transmission au récepteur de l'usager.

L'invention concerne donc un dispositif de recalage horaire dans un réseau de transmission de signaux numériques , ledit réseau comprenant des sites de codage numérique en studio, des réseaux de collecte, un site de multiplexage qui réalise le "bouquet numérique", un réseau de distribution primaire du bouquet numérique et des sites de transmission, chaque site de transmission comprenant un modulateur, un amplificateur radiofréquence et un récepteur GPS, caractérisé en ce que le dispositif de recalage horaire est disposé dans le modulateur et comprend :
- des moyens de calcul de l'heure à transmettre aux usagers,
- des moyens d'extraction de l'heure dans le bouquet numérique, et
- des moyens de substitution de l'heure extraite par l'heure calculée.

D'autres caractéristiques et avantages de la présente invention apparaîtront à la lecture de la description suivante d'un exemple particulier de réalisation, ladite description étant faite en relation avec les dessins joints dans lesquels :
- la figure 1 est un schéma d'une structure de chaîne de transmission de type numérique à laquelle s'applique l'invention,
- la figure 2 est un schéma fonctionnel d'un modulateur/émetteur comprenant un dispositif de recalage horaire selon l'invention,
- la figure 3 est un schéma fonctionnel du dispositif de recalage horaire selon l'invention,
- la figure 4 est un schéma fonctionnel montrant le calcul de l'heure qui sera transmise aux usagers, et
- la figure 5 est un schéma fonctionnel du module de substitution 72 de la figure 3.

Chaque site de transmission 16, 26 ou 36 comprend respectivement un modulateur/émetteur 18, 28 ou 38 qui se compose (figure 2) d'un modulateur 50, d'un émetteur 52, d'une antenne d'émission 54 et d'un récepteur GPS 56. L'émetteur 52 comprend un amplificateur de puissance 66 et éventuellement un filtre 68. Le modulateur 50 comprend, de manière connue, une interface d'entrée 58 du signal numérique fourni par le réseau de distribution primaire 42, un modulateur 60 proprement dit du type OFDM par exemple (OFDM étant l'acronyme de l'expression anglo-saxonne "Orthogonal Frequency Division Multiplex", qui réalise la modulation en bande de base et un convertisseur de fréquence 62 qui effectue un changement de fréquence de la bande de base.

Selon l'invention, un dispositif de recalage horaire 64 est disposé entre l'interface d'entrée 58 et le modulateur 60 et réalise un recalage de l'heure contenue dans le signal numérique du réseau de distribution en introduisant l'heure actuelle ou réelle après l'avoir corrigée de la durée du traitement dans le site de transmission.

Le récepteur GPS 56 fournit au modulateur 50 pour être utilisé de manière connue, l'information de référence de temps d'une impulsion par seconde et l'information de référence de fréquence à 10 MHz. Selon l'invention, il fournit en plus l'information horaire UTC qui est seulement utilisée par le dispositif de recalage horaire 64.

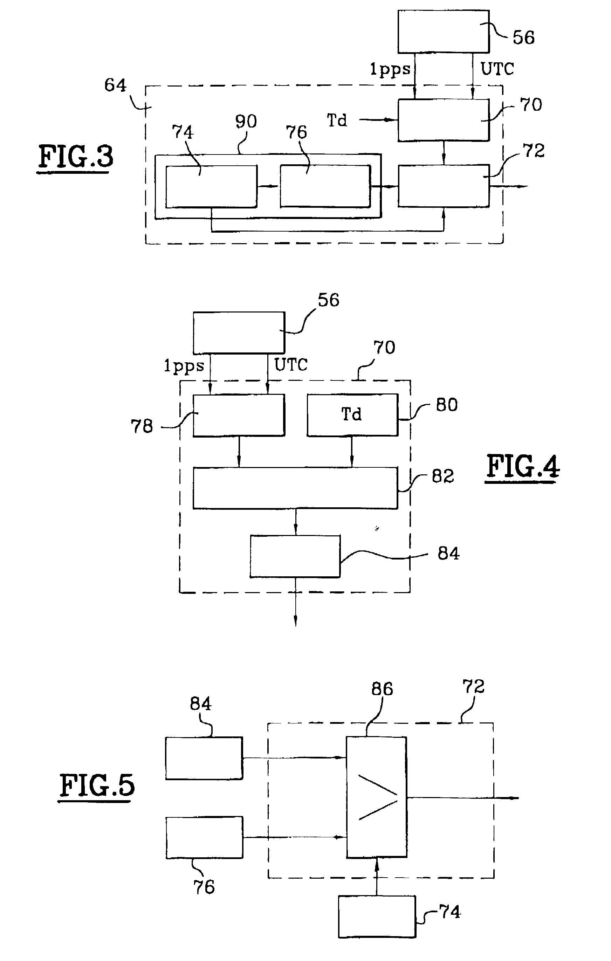

Le dispositif de recalage horaire 64 comprend (figure 3) un module de calcul 70 de l'information horaire à transmettre à partir de l'information horaire UTC, de l'information de temps d'une impulsion par seconde fournies par le récepteur GPS 56 et de l'information de durée de traitement Td dans le site de transmission. Cette information horaire corrigée se substitue à celle contenue dans le signal numérique du bouquet dans un module 72.

L'information horaire du bouquet est localisée dans le signal numérique d'entrée par les modules 74 et 76, le module 74 servant à localiser les Informations de Services SI tandis que le module 76 sert à délimiter, dans ces Informations de Services SI, celles qui correspondent à l'information du bouquet reçu.

Comme le montre la figure 4, le module 70 comprend un premier registre 78 pour mémoriser chaque seconde l'information horaire UTC réelle, un deuxième registre 80 pour mémoriser la durée de traitement Td du site de transmission considéré, un additionneur 82 pour additionner les contenus des premier et deuxième registres 78, 80 et un troisième registre 84 pour mémoriser le résultat de l'addition qui constitue l'information horaire de substitution.

Les modules 74 et 76 sont adaptés aux signaux numériques du bouquet à diffuser. Ce bouquet est fourni au modulateur sous une forme dite "multiplex de transport" qui est défini par la norme ETI (ETS 300 799) pour la radio numérique DAB (acronyme de l'expression anglo-saxonne "Digital Audio Broadcasting") et par la norme MPEG-TS(ISO/IEC 13818-1) pour la télévision numérique DVB-T (acronyme de l'expression anglo-saxonne "Digital Video Broadcasting").

Les Informations de Services SI et leur enveloppe de transport sont constituées d'éléments d'informations qui sont définis par la norme ETS 300 401 pour la radio numérique DAB et par la norme ETS 300 468 pour la télévision numérique DVB-T.

Le module de localisation 74 a pour objet de repérer l'enveloppe des Informations de Services SI dans le multiplex de transport. Pour la radio numérique, l'enveloppe est transportée par la trame ETI à un emplacement fixe. Pour la télévision numérique, l'enveloppe de transport est définie par une table TDT (acronyme de l'expression anglo-saxonne "Time and Date Table") qui est véhiculée dans des paquets dotés d'un identificateur ayant la valeur 14.

Le module de délimitation de l'heure UTC a pour objet de repérer dans l'enveloppe SI, préalablement localisée par le module 74, l'élément d'information véhiculant l'heure UTC. Pour la radio numérique, il s'agit d'un groupe disposant de l'identificateur 0/9 (FIG 0/9, FIG étant l'acronyme de l'expression anglo-saxonne "Fast Information Group"). Pour la télévision numérique, il s'agit d'une table TDT disposant de l'identificateur 0X70.

Le module de substitution 72 comprend essentiellement un multiplexeur 86 qui est commandé par un signal de substitution fourni par le module de localisation 74 et réalise la substitution des octets UTC du réseau de distribution par les octets de la valeur UTC calculée par le module 70.

La description qui vient d'être faite de l'invention montre que le dispositif de recalage horaire comprend :
- des moyens 70 de calcul de l'heure à transmettre aux usagers,
- des moyens 74 et 76 d'extraction de l'heure dans le bouquet numérique, et
- des moyens de substitution 72 de l'heure extraite par l'heure calculée.

## Revendications

1. Dispositif de recalage horaire dans un réseau de transmission de signaux numériques , ledit réseau comprenant des sites de codage numérique en studio (10, 12) (20, 22) (30, 32), des réseaux de collecte (14, 24, 34), un site de multiplexage (40) qui réalise le "bouquet numérique", un réseau de distribution primaire (42) du bouquet numérique et des sites de transmission (16, 26, 36), chaque site de transmission (16, 26, 36) comprenant un modulateur (50), un amplificateur radiofréquence (52) et un récepteur GPS (56),
caractérisé en ce que le dispositif de recalage horaire (64) est disposé dans le modulateur (50) et comprend :
- des moyens (70) de calcul de l'heure à transmettre aux usagers,
- des moyens (74, 76) d'extraction de l'heure dans le bouquet numérique, et
- des moyens de substitution (72) de l'heure extraite par l'heure calculée.

2. Dispositif de recalage horaire selon la revendication 1, caractérisé en ce que les moyens de calcul (70) comprennent :
- un module (78) pour mémoriser l'heure UTC fournie par le récepteur GPS (58),
- un module (80) pour mémoriser le retard introduit par le site de transmission concerné,
- un module (82) pour additionner l'heure UTC mémorisée par le module (78) et le retard mémorisé par le module (80), et
- un module (84) pour mémoriser l'heure calculée.

3. Dispositif de recalage horaire selon la revendication 1 ou 2, caractérisé en ce que les moyens d'extraction de l'heure dans le bouquet numérique comprennent :
- un module de localisation (74) pour repérer l'enveloppe des Informations de Services, et
- un module de délimitation (76) pour repérer dans l'enveloppe des Informations de Services l'élément d'information véhiculant l'heure UTC.

4. Dispositif de recalage horaire selon la revendication 1, 2 ou 3, caractérisé en ce que les moyens de substitution (72) comprennent un multiplexeur (86).
